# EUROPEAN PATENT SPECIFICATION

(11) **EP 4 660 041 B1**
(45) Date of publication and mention of the grant of the patent: **04.11.2026**
(21) Application number: 24179650.7
(22) Date of filing: 03.06.2024
(51) Int. Cl.: B60W 50/00, B60W 50/08

(54) **METHOD AND SYSTEM FOR DETERMINING RECOMMENDED DRIVER SETTINGS FOR A CURRENT VEHICLE**
VERFAHREN UND SYSTEM ZUR BESTIMMUNG EMPFOHLENER FAHREREINSTELLUNGEN FÜR EIN AKTUELLES FAHRZEUG
PROCÉDÉ ET SYSTÈME DE DÉTERMINATION DE RÉGLAGES DE CONDUCTEUR RECOMMANDÉS POUR UN VÉHICULE ACTUEL

(43) Date of publication of application: 10.12.2025
(73) Proprietor: VOLVO TRUCK CORPORATION, 405 08 Göteborg (SE)
(72) Inventor: Canci, Davide, 69007 LYON (FR); Le Corre, Gwenaelle, 38540 ST JUST CHALEYSSIN (FR); Ben Messaoud, Rim, 69008 LYON (FR); Gabaret, Jonathan, 69003 LYON (FR); Bonefons, Adrien, 69003 LYON (FR); Quibriac, Yann, 69007 LYON (FR)
(74) Representative: Valea AB

(56) References cited:
- DE-A1- 102018 208 431
- DE-A1- 102022 001 383
- US-A1- 2018 362 049
- US-A1- 2023 012 315
- US-A1- 20240 025 404

## Description

### TECHNICAL FIELD

The disclosure relates generally to a computer system, a vehicle, a computer-implemented method, a computer program product and a non-transitory computer-readable storage medium. In particular aspects, the disclosure relates to determining recommended user settings for a current vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A user of a vehicle has typically his/hers own personal preferences for settings in the vehicle. This may be settings related to for example safety settings, seat settings, infotainment settings, mirror settings etc. DE 10 2022 001383 discloses a vehicle and method for outputting recommendations to a person driving the vehicle to take over vehicle control. US 2023/012315 discloses an information processing system, an information processing device, an information processing method and a recording medium.

There is a strive to improve user settings for vehicles that enhances the user experience of the vehicle, increases safety and efficiency, just to mention some examples.

### SUMMARY

The invention is defined in the independent claims. According to a first aspect of the disclosure, a computer system for determining recommended user settings for a current vehicle is provided. The computer system comprises processing circuitry configured to:
- obtain historical user settings for a vehicle fleet;
- obtain current user settings for the current vehicle, wherein the current user settings are obtained from at least one or both of sensors and actuators associated with the current vehicle;
- obtain mission data for a next mission of the current vehicle;
- predict future user settings for the vehicle fleet based on the historical user settings for the vehicle fleet and the mission data; and to
- determine the recommended user settings for the current vehicle at the next mission by comparing the current user settings for the current vehicle with the predicted future user settings for the vehicle fleet and by taking the mission data into account.

The first aspect of the disclosure may seek to improve the determining of user settings for a current vehicle. A technical benefit may include that the determining of user settings for a current vehicle is improved. By taking user settings for a vehicle fleet into account, it is possible to determine recommended user settings that with high probability fit the preferred user settings of the user. Furthermore, the recommended user settings would be tailor made to the current mission of the vehicle. The improved determining of user settings for the current vehicle will help less experienced users to improve their vehicle usage.

Optionally in some examples, including in at least one preferred example, the processing circuitry may be further configured to present the recommended user settings on a user interface associated with the current vehicle. A technical benefit may include that it improves the user experience and user satisfaction in that the user gets information about which user settings that are recommended, the user may change the recommended settings according to his/hers personal preferences. Presenting the recommended user settings on a user interface supports decision making.

Optionally in some examples, including in at least one preferred example, the processing circuitry may be further configured to apply the recommended user settings to the current vehicle if no contrary information has been obtained. The user settings may be set when the vehicle is at stand still instead of the user looking and handling the settings during driving. A technical benefit may include that the user does not necessarily have to pay attention to the recommended user settings if he/she is occupied with other user tasks such as e.g. operating the vehicle, e.g. tasks that are safety critical. It may not be necessary for the user to actively confirm the recommended user settings if they are to be applied.

The processing circuitry of the first aspect is configured to monitor a gap between the compared current user settings for the current vehicle and the predicted future user settings for the vehicle fleet. The processing circuitry is configured to update the recommended user settings when the gap has reached or is above a threshold. A technical benefit may include that the next time the recommended user settings are to be determined, they will be even better and more accurate since the gap has been taken into account. The user experience related to the recommended user settings will be improved.

Optionally in some examples, including in at least one preferred example, the user settings may comprise one or more of: infotainment and application settings, safety settings, seat settings, mirror settings, energy eco settings, cruise control settings, climate settings, steering wheel settings, alarm clock settings, ready to run settings and cab conditioning settings. A technical benefit may include that recommended user settings for a variety of different settings may be determined which improves the user experience of the vehicle.

Optionally in some examples, including in at least one preferred example, the mission data may comprise one or more of: duration, path, starting point, end point, distance, day, time of mission, season, traffic density, vehicle load, intermediate stop, goods type and road condition. A technical benefit may include that, when the mission data is taken into account, the recommended user settings are tailor made to the next mission of the vehicle. This enhances the user experience. Furthermore, the energy consumption may be optimized when the recommended driver settings take the mission data into account.

Optionally in some examples, including in at least one preferred example, the historical user settings for the vehicle fleet may comprise information indicating shortcuts to user settings performed by the user at engine start and/or during a first driving distance after engine start. A technical benefit may include that the recommended user settings will take the shortcuts into account such that the change that the user made to the user settings at engine start or during the first driving distance after engine start will be remembered and applied in the recommended user settings.

Optionally in some examples, including in at least one preferred example, the historical user settings for the vehicle fleet may comprise information indicating use status of the user setting. The use status may be used or not used. The user settings with status not used may not be comprised in the recommended user settings. A technical benefit may include that user settings that are not used will not be included in the recommended user settings. This improves the user experience of the vehicle.

Optionally in some examples, including in at least one preferred example, the future user settings are predicted using a digital twin. A technical benefit may include that the recommended user settings are improved in that they more accurately reflect the preferences of the user of the current vehicle.

According to a second aspect of the disclosure, a vehicle comprising the computer system of the first aspect is provided. The second aspect of the disclosure may seek to improve the determining of user settings for a current vehicle. Technical benefits of the second aspect of the disclosure are analogous to the technical benefits of the first aspect of the disclosure.

According to a third aspect of the disclosure, a computer-implemented method for determining recommended user settings for a current vehicle as defined in claim 10 is provided.

The third aspect of the disclosure may seek to improve the determining of user settings for a current vehicle. Technical benefits of the third aspect of the disclosure are analogous to the technical benefits of the first aspect and the second aspect of the disclosure.

Optionally in some examples, including in at least one preferred example, the method may comprise:
- presenting, by the processing circuitry, the recommended user settings on a user interface associated with the current vehicle.

Optionally in some examples, including in at least one preferred example, the method may comprise:
- applying, by the processing circuitry, the recommended user settings to the current vehicle if no contrary information has been obtained.

According to a fourth aspect of the disclosure, a computer program product is provided. The computer program product comprises program code for performing, when executed by the processing circuitry, the method of the third aspect. The fourth aspect of the disclosure may seek to improve the determining of user settings for a current vehicle. Technical benefits of the fourth aspect of the disclosure are analogous to the technical benefits of the first aspect, the second aspect and the third aspect of the disclosure.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect. The fifth aspect of the disclosure may seek to improve the determining of user settings for a current vehicle. Technical benefits of the fifth aspect of the disclosure are analogous to the technical benefits of the first aspect, the second aspect, the third aspect and the fourth aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary side view of a vehicle, according to an example.
**FIG. 2** is an exemplary flow chart of a method, according to an example.
**FIG. 3** is an exemplary signaling diagram of a method, according to an example.
**FIG. 4** is an exemplary flow chart of a method, according to an example.
**FIG. 5** is an exemplary flow chart of a method, according to an example.
**FIG. 6** is another view of **FIG. 1****,** according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The disclosure determines recommended user settings for a vehicle. The recommended user settings may comprise shortcuts of actions the user is doing every engine starts or during the first kilometers. The recommended user settings take into account settings that are never or rarely used based on the user's habits and behavior enlarged by other users. The recommended user settings may improve energy consumption, user health, safety, rest area etc. The recommended user settings may support new users and make the vehicle a better place to be in.

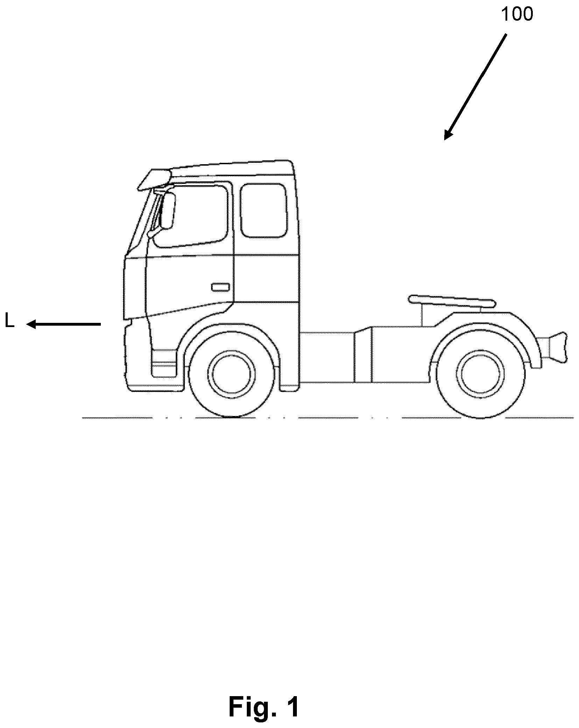

**FIG. 1** is an exemplary side view of a vehicle **100,** according to an example. The vehicle **100** may be any heavy-duty vehicle, such as truck, bus, passenger car, and construction equipment, such as an excavator, a wheel loader, etc., among other vehicle types. The vehicle **100** may be a truck for towing one or more trailers (not shown). Although the disclosure may be described with respect to a particular vehicle, the disclosure is not restricted to any particular vehicle.

The vehicle **100** may be at least partly operated by a user, e.g. a driver (not shown in **FIG. 1**). The vehicle **100** may be a manually operated vehicle or an at least partly autonomously operated vehicle, i.e., it may be a vehicle comprising autonomous driving capabilities. The vehicle **100** may be a fully electric vehicle, a hybrid vehicle or it may be driven using only a combustion engine. As such, the vehicle **100** may comprise one or more electric motors/generators and/or an internal combustion engine (not shown) for driving the vehicle **100.**

The vehicle **100** has a longitudinal direction **L** which corresponds to the travel direction of the vehicle **100.** The longitudinal direction **L** is parallel to the ground.

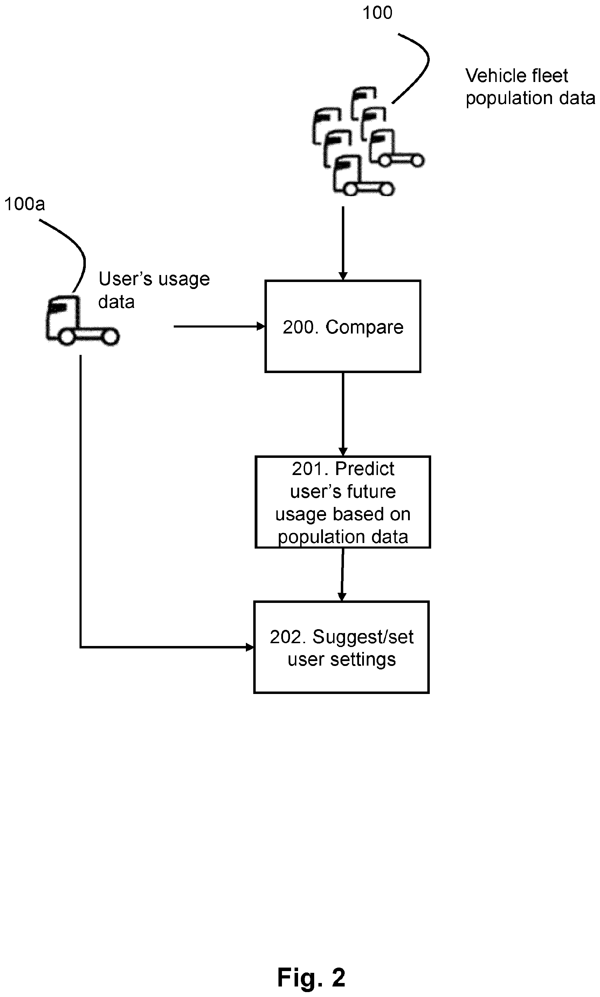

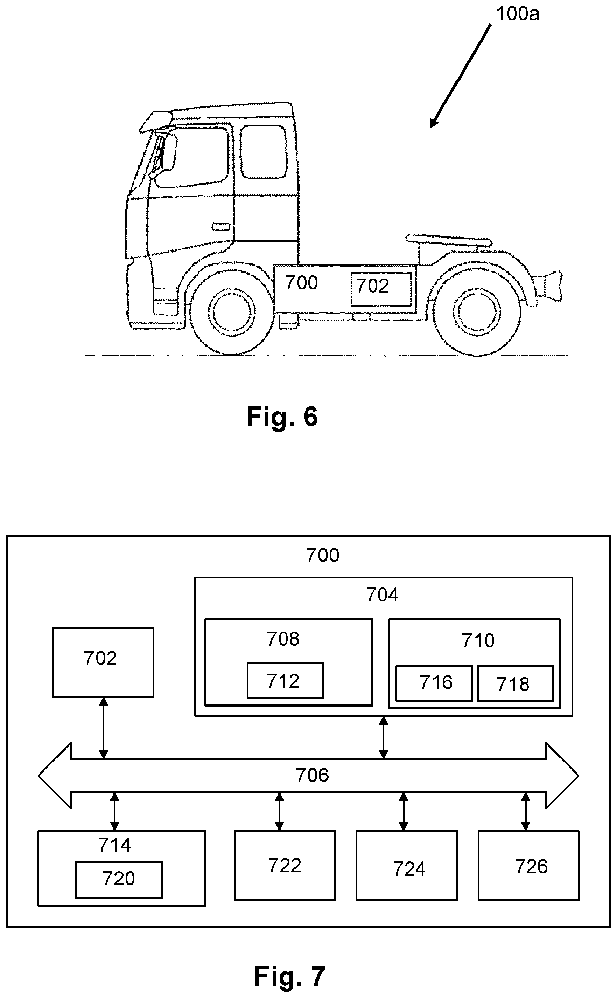

**FIG. 2** is an exemplary flow chart of a method, according to an example. **FIG.** 2 shows a vehicle fleet which comprises *n* number of vehicles **100,** where *n* is a positive integer. **FIG. 2** shows an example of a vehicle fleet with six vehicles 100, but the vehicle fleet may comprise any *n* number of vehicles **100.** **FIG. 2** shows a current vehicle **100a**. The current vehicle **100a** may be comprised in the vehicle fleet or it may not be comprised in the vehicle fleet. The method may be a computer-implemented method. The steps described below may be performed by a computer system **700** and/or a processing circuitry **702** therein. The computer system 700 and the processing circuitry **702** are illustrated in **FIG. 6** and **FIG. 7** and will be described in more detail later. The method comprises at least one of the following steps, which steps may be performed in any suitable order than described below.

Historical population data for the vehicle fleet is obtained. The population data indicates historical user settings for the vehicle fleet, i.e. for each vehicle **100** in the vehicle fleet. Usage data of the user of the current vehicle **100a** is obtained, i.e. data indicating current user settings for the current vehicle **100a**

Step **200:** The vehicle fleet population data and the user's usage data are compared.

Step **201:** The user's future usage is predicted based on the population data.

Step **202:** User settings are suggested. The suggested user settings may be set, i.e. they may be applied in the current vehicle **100a.**

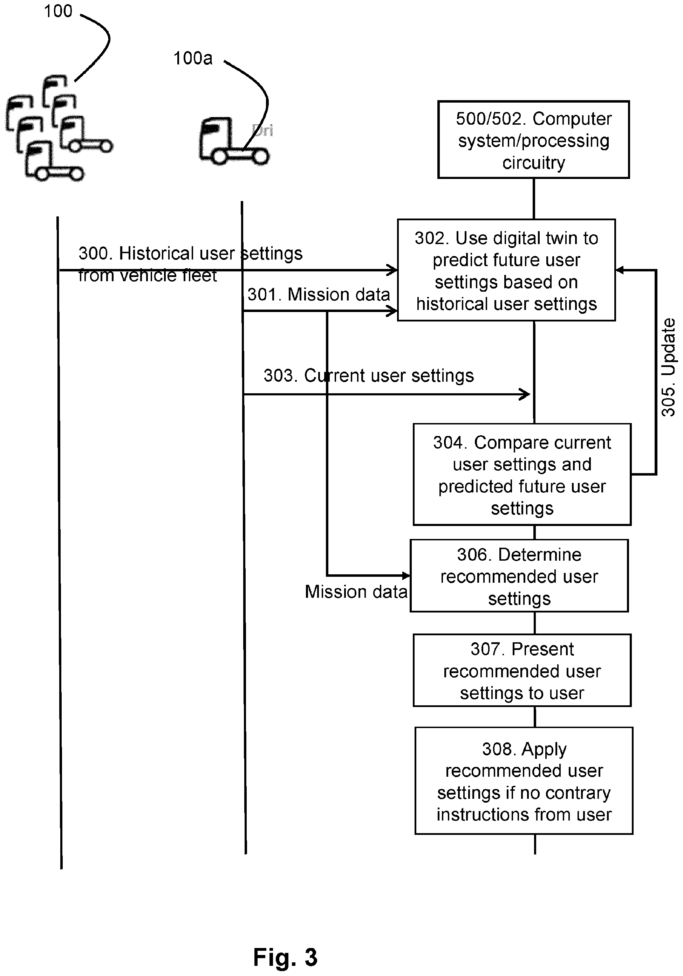

**FIG. 3** is an exemplary signaling diagram of a method, according to an example. The method may be a computer-implemented method. The method comprises at least one of the following steps, which steps may be performed in any suitable order than described below.

Step **300:** Information indicating historical user settings from the vehicle fleet **100** is provided to the computer system **700** and/or the processing circuitry **702** therein. The historical user settings may be provided by each vehicle **100** in the vehicle fleet, or it may be provided by one of the vehicles **100** in the vehicle fleet, or it may be provided by some intermediate entity, e.g. a computer system, a cloud memory, just to mention some examples.

Step **301:** Mission data of a next mission of the current vehicle **100a** is obtained by the computer system **700** and/or the processing circuitry **702.** The mission data may be provided by the current vehicle **100a,** or it may be provided by some intermediate entity, e.g. a computer system, a cloud memory, just to mention some examples.

Step **302:** This step corresponds to step **201** in **FIG. 2****.** The computer system **700** and/or the processing circuitry **702** uses a digital twin to predict future user settings for the vehicle fleet. The prediction is done using the historical user settings for the vehicle fleet from step 300 and the mission data from step **301.**

A digital twin is a digital replica of the current vehicle 100a. The digital twin is based on real-time data, e.g. real-time data indicating the current user setting sfor the current vehicle **100a.** The digital twin reflects the current state of the vehicle 100a, e.g. the current state of the user settings. A digital twin offers real-time monitoring, which is not offered by regular computational models. The digital twin is dynamically updated using real-time data and historic data, while regular computational models do not have any dynamic interactivity and does not use real-time data.

Step **303:** Information indicating current user settings for the current vehicle **100a** is provided to the computer system **700** and/or the processing circuitry **702.** The current user settings may be provided by the current vehicle **100a,** or it may be provided by some intermediate entity, e.g. a computer system, a cloud memory, just to mention some examples. The information indicating the current user settings is a continuously integration of real-time data from the actual current vehicle **100a.**

Step **304:** This step corresponds to step **200** in **FIG. 2****.** The computer system **700** and/or the processing circuitry **702** compares the current user settings for the current vehicle **100a** and the predicted future user settings for the vehicle fleet. A result of the comparison may indicate that the current user settings for the current vehicle **100a** is the same as the predicted future user settings for the vehicle fleet, or that there is a gap or difference between the current user settings for the current vehicle **100a** and the predicted future user settings for the vehicle fleet. Using other words, there is a comparison of the virtual value of the user settings generated by the digital twin vs the one modified by the user, i.e. the current user settings.

The gap monitoring between the digital twin virtual value and the measured value on the current vehicle **100a** verifies and triggers adaptations of user settings and shortcuts on the vehicle next time it would be used, daily and depending on the mission.

Step **305:** If the comparison in step **302** indicates that there is a gap between the current user settings for the current vehicle **100a** and the predicted future user settings for the vehicle fleet, then information about this may be provided to the digital twin, i.e. the digital twin may use information about the gap in coming predictions of the future user settings.

Step **306:** This step corresponds to step **202** in **FIG. 2****.** The computer system **700** and/or the processing circuitry **702** determines recommended user settings for the current vehicle **100a** at the next mission. The mission data from step **301** may be used as one input in the decision.

Step **307:** The computer system **700** and/or the processing circuitry **702** may present the recommended user settings to the user of the current vehicle **100a.** The recommended user settings may be presented via for example a user interface, e.g. a user interface comprised in a display in the vehicle **100,** a User Equipment (UE) arranged to be used by the user of the current vehicle **100a,** e.g. a mobile phone, a tablet computer etc.

Step **308:** The recommended user settings may be applied if no contrary instructions are obtained from the user.

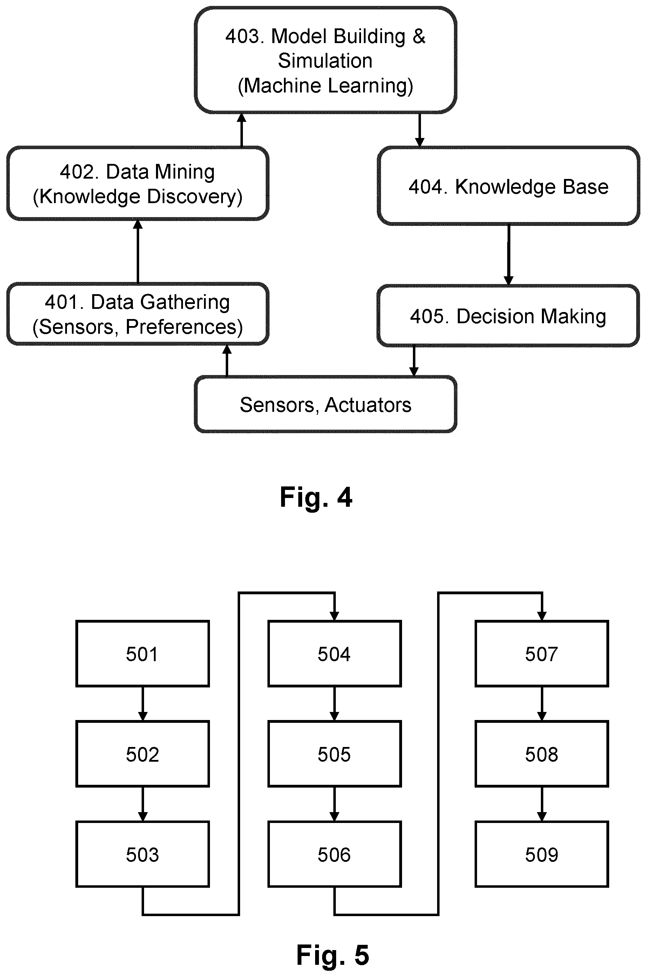

**FIG. 4** is an exemplary flow chart of a method, according to an example. The method may be a computer-implemented method. The steps described below may be performed by a computer system **700** and/or a processing circuitry **702** therein. The computer system **700** and the processing circuitry **702** are illustrated in **FIG. 6** and **FIG. 7** and will be described in more detail later. The method comprises at least one of the following steps, which steps may be performed in any suitable order than described below.

The current vehicle **100a** comprises various sensors and actuators associated with user settings in the current vehicle **100a.** The sensors and actuators may be arranged to determine the current user settings for the current vehicle **100a.**

Step **401:** This step corresponds to step 303 in **FIG. 3****.** Data gathering is performed. Data may be gathered from the sensors and/or actuators comprised in the current vehicle **100a.** The data may comprise the current user settings for the current vehicle **100a.** The data may comprise mission data for the next mission of the current vehicle **100a.** The mission data may indicate the mission profile of the next mission. Below are some examples of the current user settings that may be gathered in step **401:**
- Infotainment and apps settings
- Safety setting
- Seat setting
- Mirror setting
- Energy eco setting
- Cruise control setting
- Climate setting
- Steering wheel setting
- Alarm clock
- Ready to run
- Cab conditioning setting
- Bodybuilder equipment setting

Below are some examples of the mission data that may be gathered in step **401:**
- Trip duration
- Path
- Mission starting point
- Mission end point
- Mission distance
- Day
- Time of mission
- Season
- Traffic density
- Vehicle load
- Intermediate stop(s)
- Goods type
- Road condition
- Weather data

The data may be gathered over time or at one time instance.

Step **402:** Data mining may be performed. The data mining may comprise knowledge discovery. The data mining may explore the data in the cloud combining each data gathered from missions. Data about the current user settings may be used as input to the data mining.

Step **403:** Model building and simulation is performed. The model building and simulation may be performed using any suitable Machine Learning (ML) algorithm, for example tensor flow. The model building may comprise building a digital twin which is a digital model of the vehicle **100.** The digital twin is a digital replica of the current vehicle **100a.** The digital twin is based on real-time data. The digital twin reflects the current state of the vehicle **100a,** e.g. the current state of the user settings. The ML treatment is performed to generate for example shortcut of actions the user is doing every engine start or during the first kilometers, settings when never already used based on the current user's habits & behavior enlarged by other drivers in the vehicle fleet etc.

Step **404:** An output of the model building and simulation is created. In other words, a knowledge base is created. The knowledge base is the output of the model building and simulation in step **403.**

Step **405:** Decision making is done. Processing a new mission request through the knowledge base ends up in providing the decision making and the parameters to be applied to the vehicle **100.** The result of the decision making may be sent as input to the sensors and actuators. Step **405** may comprise gap monitoring between the digital twin virtual value and the measured value on the current vehicle **100a** to verify and to trigger adaptations of setting and shortcut on the vehicle next time it would be used, daily and depending on the mission.

**FIG. 5** is an exemplary flow chart of a method, according to an example. The method may be a computer-implemented method. The steps described below may be performed by a computer system **700** and/or a processing circuitry **702** therein. The computer system **700** and the processing circuitry **702** are illustrated in **FIG. 6** and **FIG. 7** and will be described in more detail later. The method for determining recommended user settings for a current vehicle **100a** comprises at least one of the following steps, which steps may be performed in any suitable order than described below.

Step **501:** This step corresponds to step **300** in **FIG. 3** and step **401** in **FIG. 4****.** The processing circuitry **702** of the computer system **700** obtains historical user settings for a vehicle fleet **100.** The historical user settings may comprise one or more of: infotainment and application settings, safety settings, seat settings, mirror settings, energy eco settings, cruise control settings, climate settings, steering wheel settings, alarm clock settings, ready to run settings and cab conditioning settings.

The historical user settings for the vehicle fleet **100** may comprise information indicating shortcuts to user settings performed by the user at engine start and/or during a first driving distance after engine start.

The historical user settings for the vehicle fleet 100 may comprise information indicating use status of the user setting. The use status may be used or not used. The user settings with status not used may not be comprised in the recommended user settings.

Step **502:** This step corresponds to step **303** in **FIG. 3** and step **401** in **FIG. 4****.** The processing circuitry **702** obtains current user settings for the current vehicle **100a.** The current user settings are obtained from at least one or both of sensors and actuators associated with the current vehicle **100a.**

The current user settings may comprise one or more of: infotainment and application settings, safety settings, seat settings, mirror settings, energy eco settings, cruise control settings, climate settings, steering wheel settings, alarm clock settings, ready to run settings and cab conditioning settings.

Step **503:** This step corresponds to step **301** in **FIG. 3** and step **401** in **FIG. 4****.** The processing circuitry **702** obtains mission data for the next mission of the current vehicle **100a.**

The mission data may comprise one or more of: duration, path, starting point, end point, distance, day, time of mission, season, traffic density, vehicle load, intermediate stop, goods type and road condition.

Step **504:** This step corresponds to step **201** in **FIG. 2****,** step **302** in **FIG. 3** and step **403** in **FIG. 4****.** The processing circuitry **702** predicts future user settings for the vehicle fleet **b** based on the historical user settings for the vehicle fleet **100** and the mission data. The future user settings may be predicted using a digital twin.

Step **505:** This step corresponds to steps **200** and **202** in **FIG. 2** and steps **304** and **306** in **FIG. 3****.** The processing circuitry **702** determines recommended user settings for the current vehicle **100a** at the next mission by comparing the current user settings for the current vehicle **100a** with the predicted future user settings for the vehicle fleet **100** and by taking the mission data into account.

Step **506:** This step corresponds to step **307** in **FIG. 3****.** The processing circuitry 702 may present the recommended user settings on a user interface associated with the current vehicle **100a.**

Step **507:** This step corresponds to step **308** in **FIG. 3****.** The processing circuitry 702 may apply the recommended user settings to the current vehicle **100a** if no contrary information has been obtained.

Step **508:** The processing circuitry **702** may monitor a gap between the compared current user settings for the current vehicle **100a** and the predicted future user settings for the vehicle fleet **100.**

Step **509:** The processing circuitry **702** may update the recommended user settings when the gap has reached or is above a threshold.

**FIG. 6** is another view of **FIG. 1****,** according to an example. **FIG. 6** is a side view of the current vehicle **100a.** The current vehicle **100a** comprises a computer system **700** for determining recommended user settings for a current vehicle **100a.** The computer system **700** comprises a processing circuitry **702.**

The processing circuitry **702** is configured to obtain historical user settings for a vehicle fleet **100.**

The historical user settings may comprise one or more of: infotainment and application settings, safety settings, seat settings, mirror settings, energy eco settings, cruise control settings, climate settings, steering wheel settings, alarm clock settings, ready to run settings and cab conditioning settings.

The historical user settings for the vehicle fleet **100** may comprise information indicating shortcuts to user settings performed by the user at engine start and/or during a first driving distance after engine start.

The historical user settings for the vehicle fleet **100** may comprise information indicating use status of the user setting. The use status may be used or not used. The user settings with status not used may not be comprised in the recommended user settings.

The processing circuitry **702** is configured to obtain current user settings for the current vehicle **100a.** The current user settings are obtained from at least one or both of sensors and actuators associated with the current vehicle **100a.** The current user settings may comprise one or more of: infotainment and application settings, safety settings, seat settings, mirror settings, energy eco settings, cruise control settings, climate settings, steering wheel settings, alarm clock settings, ready to run settings and cab conditioning settings.

The processing circuitry **702** is configured to obtain mission data for a next mission of the current vehicle **100a.**

The mission data may comprise one or more of: duration, path, starting point, end point, distance, day, time of mission, season, traffic density, vehicle load, intermediate stop, goods type and road condition.

The processing circuitry **702** is configured to predict future user settings for the vehicle fleet **100** based on the historical user settings for the vehicle fleet **100** and the mission data. The future user settings may be predicted using a digital twin.

The processing circuitry **702** is configured to determine the recommended user settings for the current vehicle **100a** at the next mission by comparing the current user settings for the current vehicle **100a** with the predicted future user settings for the vehicle fleet **100** and by taking the mission data into account.

The processing circuitry **702** may be further configured to present the recommended user settings on a user interface associated with the current vehicle **100a.**

The processing circuitry **702** may be further configured to apply the recommended user settings to the current vehicle **100a** if no contrary information has been obtained.

The processing circuitry **702** may be further configured to monitor a gap between the compared current user settings for the current vehicle 100a and the predicted future user settings for the vehicle fleet 100.

The processing circuitry **702** may be further configured to update the recommended user settings when the gap has reached or is above a threshold.

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or j ointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below is a list of examples 1-20 which may be combined with any one or more out of the above examples or steps, in any suitable manner.

Example 1: A computer system for determining recommended user settings for a current vehicle (100a), the computer system (700) comprising processing circuitry (702) configured to:
- obtain historical user settings for a vehicle fleet (100);
- obtain current user settings for the current vehicle (100a), wherein the current user settings are obtained from at least one or both of sensors and actuators associated with the current vehicle (100a);
- obtain mission data for a next mission of the current vehicle (100a);
- predict future user settings for the vehicle fleet (100) based on the historical user settings for the vehicle fleet (100) and the mission data; and to
- determine the recommended user settings for the current vehicle (100a) at the next mission by comparing (200, 304) the current user settings for the current vehicle (100a) with the predicted future user settings for the vehicle fleet (100) and by taking the mission data into account.

Example 2: The computer system (700) of example 1, wherein the processing circuitry (702) is further configured to:
- present the recommended user settings on a user interface associated with the current vehicle (100a).

Example 3: The computer system (700) of any of examples 1-2, wherein the processing circuitry (702) is further configured to:
- apply the recommended user settings to the current vehicle (100a) if no contrary information has been obtained.

Example 4: The computer system (700) of any of examples 1-3, wherein the processing circuitry is further configured to:
- monitor a gap between the compared current user settings for the current vehicle (100a) and the predicted future user settings for the vehicle fleet (100); and to
- update the recommended user settings when the gap has reached or is above a threshold.

Example 5: The computer system (700) of any of examples 1-4, wherein the user settings comprise one or more of: infotainment and application settings, safety settings, seat settings, mirror settings, energy eco settings, cruise control settings, climate settings, steering wheel settings, alarm clock settings, ready to run settings and cab conditioning settings.

Example 6: The computer system (700) of any of examples 1-5, wherein the mission data comprises one or more of: duration, path, starting point, end point, distance, day, time of mission, season, traffic density, vehicle load, intermediate stop, goods type and road condition.

Example 7: The computer system (700) of any of examples 1-6, wherein the historical user settings for the vehicle fleet (100) comprise information indicating shortcuts to user settings performed by the user at engine start and/or during a first driving distance after engine start.

Example 8: The computer system (700) of any of examples 1-7, wherein the historical user settings for the vehicle fleet (100) comprise information indicating use status of the user setting, wherein the use status is used or not used; and wherein the user settings with status not used are not comprised in the recommended user settings.

Example 9: The computer system (700) of any of examples 1-8, wherein the future user settings are predicted using a digital twin.

Example 10: A vehicle (100) comprising the computer system of any of examples 1-9.

Example 11. A computer-implemented method for determining recommended user settings for a current vehicle (100a), the method comprising:
- *obtaining* (300, 401, 501), by processing circuitry (702) of a computer system (700), historical user settings for a vehicle fleet (100);
- *obtaining* (303, 401, 502), by the processing circuitry (702), current user settings for the current vehicle (100a), wherein the current user settings are obtained from at least one or both of sensors and actuators associated with the current vehicle (100a);
- *obtaining* (301, 401, 503), by the processing circuitry (702), mission data for the next mission of the current vehicle (100a);
- *predicting* (201, 302, 403, 504), by the processing circuitry (702), future user settings for the vehicle fleet (100) based on the historical user settings for the vehicle fleet (100) and the mission data; and
- *determining* (202, 304, 306, 505), by the processing circuitry (702), recommended user settings for the current vehicle (100a) at the next mission by comparing (200, 304) the current user settings for the current vehicle (100a) with the predicted future user settings for the vehicle fleet (100) and by taking the mission data into account.

Example 12: The method of example 11, comprising:
- *presenting* (307, 506), by the processing circuitry (702), the recommended user settings on a user interface associated with the current vehicle (100a).

Example 13: The method of any of examples 11-12, comprising:
*applying* (308, 507), by the processing circuitry (702), the recommended user settings to the current vehicle (100a) if no contrary information has been obtained.

Example 14: The method of any of examples 11-13, comprising:
- *monitoring,* by the processing circuitry (702), a gap between the compared current user settings for the current vehicle (100a) and the predicted future user settings for the vehicle fleet (100); and
- *updating,* by the processing circuitry (702), the recommended user settings when the gap has reached or is above a threshold.

Example 15: The method of any of examples 11-14, wherein the user settings comprise one or more of: infotainment and application settings, safety settings, seat settings, mirror settings, energy eco settings, cruise control settings, climate settings, steering wheel settings, alarm clock settings, ready to run settings and cab conditioning settings.

Example 16: The method of any of examples 11-15, wherein the mission data comprises one or more of: duration, path, starting point, end point, distance, day, time of mission, season, traffic density, vehicle load, intermediate stop, goods type and road condition.

Example 17: The method of any of examples 11-16, the historical user settings for the vehicle fleet (100) comprise information indicating shortcuts to user settings performed by the user at engine start and/or during a first driving distance after engine start.

Example 18: The method of any of examples 11-17, wherein the historical user settings for the vehicle fleet (100) comprise information indicating use status of the user setting, wherein the use status is used or not used; and wherein the user settings with status not used are not comprised in the recommended user settings.

Example 19: The method of any of examples 11-18, wherein the future user settings are predicted using a digital twin.

Example 20: A computer program product comprising program code for performing, when executed by the processing circuitry, the method of any of examples 11-19.

Example 21: A non-transitory computer-readable storage medium comprising instructions, which when executed by the processing circuitry, cause the processing circuitry to perform the method of any of examples 11-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system for determining recommended user settings for a current vehicle (100a), the computer system (700) comprising processing circuitry (702) configured to:
obtain historical user settings for a vehicle fleet (100);
obtain current user settings for the current vehicle (100a), wherein the current user settings are obtained from at least one or both of sensors and actuators associated with the current vehicle (100a);
obtain mission data for a next mission of the current vehicle (100a);
predict future user settings for the vehicle fleet (100) based on the historical user settings for the vehicle fleet (100) and the mission data; and to
determine the recommended user settings for the current vehicle (100a) at the next mission by comparing (200, 304) the current user settings for the current vehicle (100a) with the predicted future user settings for the vehicle fleet (100) and by taking the mission data into account,
**characterized in that** the processing circuitry (702) is configured to:
monitor a gap between the compared current user settings for the current vehicle (100a) and the predicted future user settings for the vehicle fleet (100); and to
update the recommended user settings when the gap has reached or is above a threshold.

2. The computer system (700) of claim 1, wherein the processing circuitry (702) is further configured to:
present the recommended user settings on a user interface associated with the current vehicle (100a).

3. The computer system (700) of any of claims 1-2, wherein the processing circuitry (702) is further configured to:
apply the recommended user settings to the current vehicle (100a) if no contrary information has been obtained.

4. The computer system (700) of any of claims 1-3, wherein the user settings comprise one or more of: infotainment and application settings, safety settings, seat settings, mirror settings, energy eco settings, cruise control settings, climate settings, steering wheel settings, alarm clock settings, ready to run settings and cab conditioning settings.

5. The computer system (700) of any of claims 1-4, wherein the mission data comprises one or more of: duration, path, starting point, end point, distance, day, time of mission, season, traffic density, vehicle load, intermediate stop, goods type and road condition.

6. The computer system (700) of any of claims 1-5, wherein the historical user settings for the vehicle fleet (100) comprise information indicating shortcuts to user settings performed by the user at engine start and/or during a first driving distance after engine start.

7. The computer system (700) of any of claims 1-6, wherein the historical user settings for the vehicle fleet (100) comprise information indicating use status of the user setting, wherein the use status is used or not used; and
wherein the user settings with status not used are not comprised in the recommended user settings.

8. The computer system (700) of any of claims 1-7, wherein the future user settings are predicted using a digital twin.

9. A vehicle (100) comprising the computer system of any of claims 1-8.

10. A computer-implemented method for determining recommended user settings for a current vehicle (100a), the method comprising:
*obtaining* (300, 401, 501), by processing circuitry (702) of a computer system (700), historical user settings for a vehicle fleet (100);
*obtaining* (303, 401, 502), by the processing circuitry (702), current user settings for the current vehicle (100a), wherein the current user settings are obtained from at least one or both of sensors and actuators associated with the current vehicle (100a);
*obtaining* (301, 401, 503), by the processing circuitry (702), mission data for the next mission of the current vehicle (100a);
*predicting* (201, 302, 403, 504), by the processing circuitry (702), future user settings for the vehicle fleet (100) based on the historical user settings for the vehicle fleet (100) and the mission data; and
*determining* (202, 304, 306, 505), by the processing circuitry (702), recommended user settings for the current vehicle (100a) at the next mission by comparing (200, 304) the current user settings for the current vehicle (100a) with the predicted future user settings for the vehicle fleet (100) and by taking the mission data into account,
**characterized in that** the method comprises:
*monitoring* a gap between the compared current user settings for the current vehicle (100a) and the predicted future user settings for the vehicle fleet (100); and
*updating* the recommended user settings when the gap has reached or is above a threshold.

11. The method of claim 10, comprising:
*presenting* (307, 506), by the processing circuitry (702), the recommended user settings on a user interface associated with the current vehicle (100a).

12. The method of any of claims 10-11, comprising:
*applying* (308, 507), by the processing circuitry (702), the recommended user settings to the current vehicle (100a) if no contrary information has been obtained.

13. A computer program product comprising program code for performing, when executed by the processing circuitry, the method of any of claims 10-12.

14. A non-transitory computer-readable storage medium comprising instructions, which when executed by the processing circuitry, cause the processing circuitry to perform the method of any of claims 10-12.

## Patentansprüche

1. Computersystem zum Bestimmen empfohlener Benutzereinstellungen für ein aktuelles Fahrzeug (100a), das Computersystem (700) umfassend eine Verarbeitungsschaltung (702), die konfiguriert ist zum:
Erhalten historischer Benutzereinstellungen für eine Fahrzeugflotte (100);
Erhalten aktueller Benutzereinstellungen für das aktuelle Fahrzeug (100a), wobei die aktuellen Benutzereinstellungen von mindestens einem oder beiden von Sensoren und Aktuatoren erhalten werden, die mit dem aktuellen Fahrzeug (100a) verknüpft sind;
Erhalten von Missionsdaten für eine nächste Mission des aktuellen Fahrzeugs (100a);
Vorhersagen zukünftiger Benutzereinstellungen für die Fahrzeugflotte (100) basierend auf den historischen Benutzereinstellungen für die Fahrzeugflotte (100) und den Missionsdaten; und zum
Bestimmen der empfohlenen Benutzereinstellungen für das aktuelle Fahrzeug (100a) bei der nächsten Mission durch Vergleichen (200, 304) der aktuellen Benutzereinstellungen für das aktuelle Fahrzeug (100a) mit den vorhergesagten zukünftigen Benutzereinstellungen für die Fahrzeugflotte (100) und durch Berücksichtigen der Missionsdaten,
**dadurch gekennzeichnet, dass** die Verarbeitungsschaltung (702) konfiguriert ist zum:
Überwachen einer Differenz zwischen den verglichenen aktuellen Benutzereinstellungen für das aktuelle Fahrzeug (100a) und den vorhergesagten zukünftigen Benutzereinstellungen für die Fahrzeugflotte (100); und zum
Aktualisieren der empfohlenen Benutzereinstellungen, wenn die Differenz einen Schwellenwert erreicht hat oder darüber liegt.

2. Computersystem (700) nach Anspruch 1, wobei die Verarbeitungsschaltung (702) ferner konfiguriert ist zum:
Präsentieren der empfohlenen Benutzereinstellungen auf einer Benutzerschnittstelle, die mit dem aktuellen Fahrzeug (100a) verknüpft ist.

3. Computersystem (700) nach einem der Ansprüche 1 bis 2, wobei die Verarbeitungsschaltung (702) ferner konfiguriert ist zum:
Anwenden der empfohlenen Benutzereinstellungen auf das aktuelle Fahrzeug (100a), falls keine gegenteiligen Informationen erhalten wurden.

4. Computersystem (700) nach einem der Ansprüche 1 bis 3, wobei die Benutzereinstellungen eines oder mehrere umfassen von: Infotainment- und Anwendungseinstellungen, Sicherheitseinstellungen, Sitzeinstellungen, Spiegeleinstellungen, Energie-Eco-Einstellungen, Geschwindigkeitsregelungseinstellungen, Klimaeinstellungen, Lenkradeinstellungen, Weckereinstellungen, Betriebsbereitschaftseinstellungen und Kabinenklimatisierungseinstellungen.

5. Computersystem (700) nach einem der Ansprüche 1 bis 4, wobei die Missionsdaten eines oder mehrere umfassen von: Dauer, Weg, Startpunkt, Endpunkt, Entfernung, Tag, Missionszeit, Jahreszeit, Verkehrsdichte, Fahrzeugladung, Zwischenstopp, Güterart und Straßenzustand.

6. Computersystem (700) nach einem der Ansprüche 1 bis 5, wobei die historischen Benutzereinstellungen für die Fahrzeugflotte (100) Informationen umfassen, die Schnellzugriffe auf Benutzereinstellungen anzeigen, die durch den Benutzer bei einem Motorstart und/oder während einer ersten Fahrstrecke nach dem Motorstart durchgeführt werden.

7. Computersystem (700) nach einem der Ansprüche 1 bis 6, wobei die historischen Benutzereinstellungen für die Fahrzeugflotte (100) Informationen umfassen, die einen Verwendungsstatus der Benutzereinstellung anzeigen, wobei der Verwendungsstatus verwendet oder nicht verwendet ist; und
wobei die Benutzereinstellungen mit dem Status nicht verwendet nicht in den empfohlenen Benutzereinstellungen umfasst sind.

8. Computersystem (700) nach einem der Ansprüche 1 bis 7, wobei die zukünftigen Benutzereinstellungen unter Verwendung eines digitalen Zwillings vorhergesagt werden.

9. Fahrzeug (100), umfassend das Computersystem nach einem der Ansprüche 1 bis 8.

10. Computerimplementiertes Verfahren zum Bestimmen empfohlener Benutzereinstellungen für ein aktuelles Fahrzeug (100a), das Verfahren umfassend:
*Erhalten* (300, 401, 501), durch die Verarbeitungsschaltung (702) eines Computersystems (700), historischer Benutzereinstellungen für eine Fahrzeugflotte (100);
*Erhalten* (303, 401, 502), durch die Verarbeitungsschaltung (702), aktueller Benutzereinstellungen für das aktuelle Fahrzeug (100a), wobei die aktuellen Benutzereinstellungen von mindestens einem oder beiden von Sensoren und Aktuatoren erhalten werden, die mit dem aktuellen Fahrzeug (100a) verknüpft sind;
*Erhalten* (301, 401, 503), durch die Verarbeitungsschaltung (702), von Missionsdaten für die nächste Mission des aktuellen Fahrzeugs (100a);
*Vorhersagen* (201, 302, 403, 504), durch die Verarbeitungsschaltung (702), zukünftiger Benutzereinstellungen für die Fahrzeugflotte (100) basierend auf den historischen Benutzereinstellungen für die Fahrzeugflotte (100) und den Missionsdaten; und
*Bestimmen* (202, 304, 306, 505), durch die Verarbeitungsschaltung (702), empfohlener Benutzereinstellungen für das aktuelle Fahrzeug (100a) bei der nächsten Mission durch Vergleichen (200, 304) der aktuellen Benutzereinstellungen für das aktuelle Fahrzeug (100a) mit den vorhergesagten zukünftigen Benutzereinstellungen für die Fahrzeugflotte (100) und durch Berücksichtigen der Missionsdaten,
**dadurch gekennzeichnet, dass** das Verfahren umfasst:
*Überwachen* einer Differenz zwischen den verglichenen aktuellen Benutzereinstellungen für das aktuelle Fahrzeug (100a) und den vorhergesagten zukünftigen Benutzereinstellungen für die Fahrzeugflotte (100); und
*Aktualisieren* der empfohlenen Benutzereinstellungen, wenn die Differenz einen Schwellenwert erreicht hat oder darüber liegt.

11. Verfahren nach Anspruch 10, umfassend:
*Präsentieren* (307, 506), durch die Verarbeitungsschaltung (702), der empfohlenen Benutzereinstellungen auf einer Benutzerschnittstelle, die mit dem aktuellen Fahrzeug (100a) verknüpft ist.

12. Verfahren nach einem der Ansprüche 10 bis 11, umfassend:
*Anwenden* (308, 507), durch die Verarbeitungsschaltung (702), der empfohlenen Benutzereinstellungen auf das aktuelle Fahrzeug (100a), falls keine gegenteiligen Informationen erhalten wurden.

13. Computerprogrammprodukt, umfassend einen Programmcode zum Durchführen des Verfahrens nach einem der Ansprüche 10 bis 12, wenn dieser durch die Verarbeitungsschaltung ausgeführt wird.

14. Nichtflüchtiges, computerlesbares Speichermedium, umfassend Anweisungen, die, wenn sie durch die Verarbeitungsschaltung ausgeführt werden, die Verarbeitungsschaltung veranlassen, das Verfahren nach einem der Ansprüche 10 bis 12 durchzuführen.

## Revendications

1. Système informatique destiné à déterminer des paramètres utilisateur recommandés pour un véhicule actuel (100a), le système informatique (700) comprenant une circuiterie de traitement (702) configurée pour :
obtenir des paramètres utilisateur historiques pour une flotte de véhicules (100) ;
obtenir des paramètres utilisateur actuels pour le véhicule actuel (100a), dans lequel les paramètres utilisateur actuels sont obtenus à partir d'au moins l'un ou les deux parmi des capteurs et des actionneurs associés au véhicule actuel (100a) ;
obtenir des données de mission pour une mission suivante du véhicule actuel (100a) ;
prédire des paramètres utilisateur futurs pour la flotte de véhicules (100) sur la base des paramètres utilisateur historiques pour la flotte de véhicules (100) et des données de mission ; et
déterminer les paramètres utilisateur recommandés pour le véhicule actuel (100a) lors de la mission suivante en comparant (200, 304) les paramètres utilisateur actuels pour le véhicule actuel (100a) avec les paramètres utilisateur futurs prédits pour la flotte de véhicules (100) et en tenant compte des données de mission,
**caractérisé en ce que** la circuiterie de traitement (702) est configurée pour :
surveiller un écart entre les paramètres utilisateur actuels comparés pour le véhicule actuel (100a) et les paramètres utilisateur futurs prédits pour la flotte de véhicules (100) ; et
mettre à jour les paramètres utilisateur recommandés lorsque l'écart a atteint ou est supérieur à un seuil.

2. Système informatique (700) selon la revendication 1, dans lequel la circuiterie de traitement (702) est en outre configurée pour :
présenter les paramètres utilisateur recommandés sur une interface utilisateur associée au véhicule actuel (100a).

3. Système informatique (700) selon l'une quelconque des revendications 1 à 2, dans lequel la circuiterie de traitement (702) est configurée en outre pour :
appliquer les paramètres utilisateur recommandés au véhicule actuel (100a) si aucune information contraire n'a été obtenue.

4. Système informatique (700) selon l'une quelconque des revendications 1 à 3, dans lequel les paramètres utilisateur comprennent un ou plusieurs des éléments suivants : des paramètres d'infodivertissement et d'application, des paramètres de sécurité, des paramètres de siège, des paramètres de rétroviseur, des paramètres d'économie d'énergie, des paramètres de régulateur de vitesse, des paramètres de climatisation, des paramètres de volant de direction, des paramètres de réveil, des paramètres de prêt à rouler et des paramètres de conditionnement de cabine.

5. Système informatique (700) selon l'une quelconque des revendications 1 à 4, dans lequel les données de mission comprennent un ou plusieurs des éléments suivants : durée, trajet, point de départ, point d'arrivée, distance, jour, heure de mission, saison, densité de trafic, charge du véhicule, arrêt intermédiaire, type de marchandises et état de la route.

6. Système informatique (700) selon l'une quelconque des revendications 1 à 5, dans lequel les paramètres utilisateur historiques pour la flotte de véhicules (100) comprennent des informations indiquant des raccourcis vers des paramètres utilisateur effectués par l'utilisateur au démarrage du moteur et/ou pendant une première distance de conduite après le démarrage du moteur.

7. Système informatique (700) selon l'une quelconque des revendications 1 à 6, dans lequel les paramètres utilisateur historiques pour la flotte de véhicules (100) comprennent des informations indiquant l'état d'utilisation du paramètre d'utilisateur, dans lequel l'état d'utilisation est utilisé ou non utilisé ; et
dans lequel les paramètres utilisateur avec le statut non utilisé ne sont pas compris dans les paramètres utilisateur recommandés.

8. Système informatique (700) selon l'une quelconque des revendications 1 à 7, dans lequel les paramètres utilisateur futurs sont prédits à l'aide d'un jumeau numérique.

9. Véhicule (100) comprenant le système informatique selon l'une quelconque des revendications 1 à 8.

10. Procédé mis en œuvre par ordinateur destiné à déterminer des paramètres utilisateur recommandés pour un véhicule actuel (100a), le procédé comprenant :
*l'obtention* (300, 401, 501), par une circuiterie de traitement (702) d'un système informatique (700), de paramètres utilisateur historiques pour une flotte de véhicules (100) ;
*l'obtention* (303, 401, 502), par la circuiterie de traitement (702), de paramètres utilisateur actuels pour le véhicule actuel (100a), dans lequel les paramètres utilisateur actuels sont obtenus à partir d'au moins l'un ou les deux parmi des capteurs et des actionneurs associés au véhicule actuel (100a) ;
*l'obtention* (301, 401, 503), par la circuiterie de traitement (702), de données de mission pour la mission suivante du véhicule actuel (100a) ;
*la prédiction* (201, 302, 403, 504), par la circuiterie de traitement (702), de paramètres utilisateur futurs pour la flotte de véhicules (100) sur la base des paramètres utilisateur historiques pour la flotte de véhicules (100) et des données de mission ; et
*la détermination* (202, 304, 306, 505), par la circuiterie de traitement (702), de paramètres utilisateur recommandés pour le véhicule actuel (100a) lors de la mission suivante en comparant (200, 304) les paramètres utilisateur actuels pour le véhicule actuel (100a) avec les paramètres utilisateur futurs prédits pour la flotte de véhicules (100) et en prenant en compte les données de mission,
**caractérisé en ce que** le procédé comprend :
*la surveillance* d'un écart entre les paramètres utilisateur actuels comparés pour le véhicule actuel (100a) et les paramètres utilisateur futurs prédits pour la flotte de véhicules (100) ; et
*la mise à jour* des paramètres utilisateur recommandés lorsque l'écart a atteint ou est supérieur à un seuil.

11. Procédé selon la revendication 10, comprenant :
*la présentation* (307, 506), par la circuiterie de traitement (702), des paramètres utilisateur recommandés sur une interface utilisateur associée au véhicule actuel (100a).

12. Procédé selon l'une quelconque des revendications 10 à 11, comprenant :
*l'application* (308, 507), par la circuiterie de traitement (702), des paramètres utilisateur recommandés au véhicule actuel (100a) si aucune information contraire n'a été obtenue.

13. Produit-programme d'ordinateur comprenant un code de programme permettant de réaliser, lorsqu'il est exécuté par la circuiterie de traitement, le procédé selon l'une quelconque des revendications 10 à 12.

14. Support de stockage non transitoire lisible par ordinateur comprenant des instructions qui, lorsqu'elles sont exécutées par la circuiterie de traitement, amènent la circuiterie de traitement à effectuer le procédé selon l'une quelconque des revendications 10 à 12.
